# EUROPEAN PATENT SPECIFICATION

(11) **EP 4 367 587 B1**
(45) Date of publication and mention of the grant of the patent: **18.11.2026**
(21) Application number: 22748273.4
(22) Date of filing: 07.07.2022
(51) Int. Cl.: G06F 21/16, G06T 1/00, G06Q 50/00, H04W 4/21, H04N 1/32, H04L 9/40, H04L 67/12, H04W 12/02, G06Q 10/40

(54) **A SYSTEM FOR PROVIDING A SHARE STATEMENT LINKED TO A DIGITAL IDENTIFIER OF AN IMAGE**
SYSTEM ZUR BEREITSTELLUNG EINER MIT EINEM DIGITALEN IDENTIFIKATOR EINES BILDES VERBUNDENEN GEMEINSAMEN ANWEISUNG
SYSTÈME POUR FOURNIR UNE DÉCLARATION DE PARTAGE LIÉE À UN IDENTIFIANT NUMÉRIQUE D'UNE IMAGE

(30) Priority: 09.07.2021 US 202163220173 P
(43) Date of publication of application: 15.05.2024
(73) Proprietor: Sasha ApS, 5000 Odense C (DK)
(72) Inventor: ERIKSSON, Thomas Alexander Krause, 5270 Odense N (DK)
(74) Representative: Patrade A/S
(86) International application number: PCT/EP2022/068937
(87) International publication number: WO 2023/280989

(56) References cited:
- US-A1- 2008 199 040
- US-A1- 2013 308 817
- US-A1- 2017 270 630

## Description

### Field of the Invention

The present invention relates to systems and methods for providing a share statement linked to a digital identifier of an image.

Furthermore, the present invention relates to systems and methods for efficient identification of an image and for global change of the share statement linked to a digital identifier of an image.

### Background of the Invention

There is an ever-increasing number of images (photos and videos) publicly available on the internet. The images are hosted by various service providers including but not limited to Facebook, Snapchat, Alphabet, Twitter and Reddit.

There may even be several copies or partial copies of the same image at the same service provider or at a plurality of different service providers. This is not a problem in itself as there are several reasons why a person or a company would actively seek to have an image such as a photo or video spread across the internet as much as possible.

At the same time, the internet enables easy sharing of images, which were sent in confidentiality to a recipient, but later shared in bad faith. In these cases it is almost impossible to prove who the culprit is behind the distribution of said image.

An act of bad faith may also be when a third party creates a fake profile at a service provider of an influencer in the effort to abuse the good will of the influencer.

Since it is easy to share images on the internet and to further distribute the images, it becomes hard to enforce the right to be forgotten as practiced in the EU. This is partly due the amount of computational power it would require comparing an image with millions of other images, which potentially violate the right to be forgotten.

Thus, it is in practice impossible to retract an image from the internet, however, if there were a system for preventing or limiting the spreading of images on the various service providers, then the problem can be limited.

US20130308817A1 describes a solution for management of digital information including sharing in a private forum without the need for network access. The system uses processing software to register an individual. The system stores an individual's profile and preference information in a database of digital information. When the individual makes contact with another entity (e.g., business or another individual) that he would like to connect with or share information with, one individual allows his device to be scanned using a scanner (e.g., microphone or camera in a iPhone or the like) such that the scanner entity can extract the embedded individual digital watermark and initiate a connection between the devices. This connection makes it possible for an individual to provide access to a category or other elements of their database of preselected digital information.

US20080199040A1 describes a device to capture and image, embed a watermark into the image and transmit the image through a wireless interface of the portable device.

### Object of the Invention

It is an object of the invention to provide a system and a method for providing a share statement linked to a digital identifier of an image which is more energy efficient.

It is an object of the invention to provide a method for a service provider to act according to an auxiliary information including a share statement linked to an image.

### Description of the Invention

An object of the invention is achieved by a system for providing auxiliary information linked to an image encoded with one or more digital identifiers. The system comprising
- at least one sender device comprising
   - a communication module,
   - an encoding module adapted to encode an image with one or more digital identifiers and to create one or more digital identifier keys, wherein the sender device is configured to perform the following steps when uploading an image to a recipient:
      - a step of encoding the image with one or more digital identifiers, thereby creating an encoded image;
      - a step of creating one or more digital identifier keys of said encoded image as a function of the one or more digital identifiers;
      - a step of creating auxiliary information, the auxiliary information including at least a share statement;
      - a step of linking the auxiliary information to the one or more digital identifier keys;
      - a step of sending the one or more digital identifier keys and auxiliary information to a server system; followed by
      - a step of uploading the encoded image to the recipient;
- the server system comprising
   - a registry comprising a plurality of digital identifier keys linked to auxiliary information; wherein the server system is configured to perform the following steps, when receiving a request image from a requester:
      - a step of searching the request image for encoded digital identifiers as a function of the plurality of digital identifier keys; and
      - a step of sending at least the share statement linked to the digital identifier key to the requester.

The system comprises the at least one sender device and the server system, wherein information related to the image is stored. Thereby, the server system becomes a centralized server enabling at least in principle any requester to receive auxiliary information linked to said image via the digital identifier. The requester may not receive all auxiliary information; however, the requester will at least receive the share statement.

The share statement may be chosen from the non-exhaustive list below:
- all sharing allowed
- all sharing allowed - image may not be used for profile picture
- all sharing allowed - image may only be used for profile picture for the following accounts and handles (followed by a list of accounts and handles);
- all sharing allowed at a specific service provider, otherwise no sharing allowed
- no sharing allowed
- image is confidential - no sharing allowed

The non-exhaustive list of share statement enables the users or owners of the at least one sender device to give global instructions to service provides as each service provider can be the requester requesting an auxiliary information of an image.

As an example, the share statement "all sharing allowed - image may not be used for profile picture" will reduce the risk of creating fake profiles aiming to abuse the good will of an influencer, where the fake profile pose as the influencer.

The sender device may be a smart device, a smart phone, a tablet, a laptop, or a computer device. The sender device comprises the communication module for communicating with the server system and the recipient.

The communication module may be configured to communicate via Bluetooth and/or WiFi, and/or using band cellular network technology such as 4G or 5G, and/or via a wired connection such as an ethernet cable.

The sender device comprises the encoding module, which is adapted to encode an image with one or more digital identifiers and to create one or more digital identifier keys. Thus, the encoding module performs the steps of
- encoding the image with one or more digital identifiers; and
- creating one or more digital identifier keys of said encoded image as a function of the one or more digital identifiers.

The two steps described above may be performed simultaneously by the encoding module.

The encoding module may be a processor and/or a GPU or a dedicated unit designed to encode images with one or more digital identifiers.

In the present application, the term image in singular must be interpreted as single image i.e. a photo and as a series of images i.e. a video or a gif.

The digital identifier will be discussed later in greater detail. However, the digital identifier may be metadata and/or a digital watermark encoded into the image. The digital watermark is essentially a pattern, which the digital identifier key will enable a computer such as the server system to recognize faster and more energy efficient compared to not having digital identifier key.

Furthermore, the step of searching for a digital identifier such as a watermark in an image using digital identifier key is computational more energy efficient than comparing whether two images are identical since a 4K image contain 3840 x 2160 pixels, while the digital identifier is contained in a subset of the image which can be recognized with less computation time since less data is used for the evaluation. This enable the server system to efficiently search the request image for encoded digital identifiers as a function of the plurality of the identifier keys.

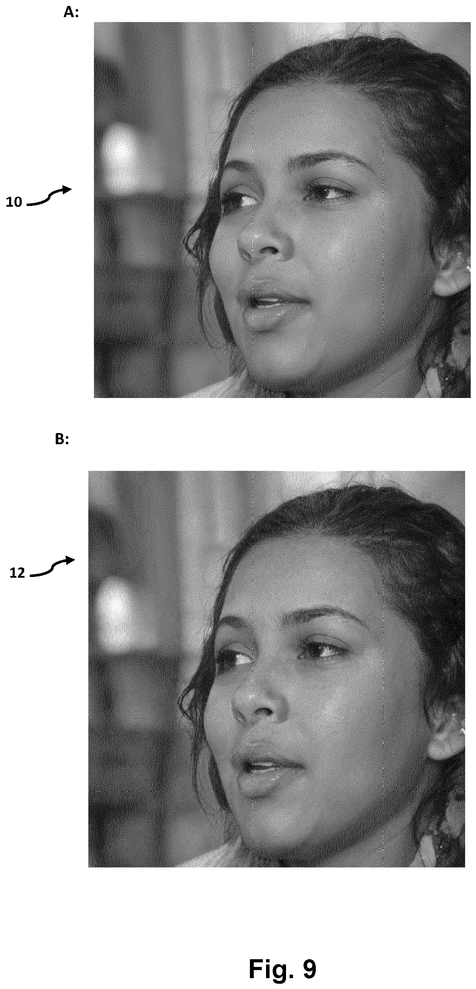

Furthermore, the digital identifier such as a digital watermark will also enable identification of a cropped image, where most of the image has been removed. As an example, the image shown in fig. 9B could be changed by removing or replacing the background or part of the face, which will make it more difficult to perform a compare with fig. 9A. However, the digital fingerprint will still be part of one or more subsets of the image, which the server system with the corresponding digital key will be able to recognize. Thus, the server system would be able to provide at least the share statement even if the image has been modified.

The requester sending the request image to the server system could in theory be any natural person or any legal person. However, in practice there may be non-technical reasons for not enabling any natural person or any legal person to request a share statement; the non-technical reason may be the GDPR rules in the EU or other national laws or other federal laws.

The step of sending at least the share statement linked to the requester digital identifier key to the requester may include other parts of the auxiliary information depending on the level of security set by the original sender and/or who the requester is.

In an aspect, the auxiliary information includes at least one or more of the following:
- recipient ID;
- contact details of the recipient;
- sender ID;
- contact details of the sender;
- user names or handles to one or more social medias linked to the sender device.

The sender ID and the contact details of sender refer to the owner or the user of the sender device. The owner or the user of the sender device may be a natural person or legal person. Likewise, the recipient ID and the contact details of the recipient refer to the natural person or legal person being the recipient.

The list of the auxiliary information is not an exhaustive list of all possible auxiliary information. The list represents auxiliary information, which can be used by the server system to notify the owner or user of the sender device that the image has been identified based on an image received by a requester. In the case, where the requester is a service provider, then this information may be sent to the owner or the user of the sender device.

In an aspect, wherein the recipient is a service provider and the encoded image is publicly available at the service provider.

The service provider may be reddit or an open online forum or Instagram or YouTube any other service provider having publicly available images provided by users. Even though the encoded image was uploaded to the service provider and made publicly available then it may not mean that the owner or user of the sender device is interested in the image being shared on other websites or apps provided by other service providers.

The sharing of the image can be limited by choosing a specific share statement linked to the one or more digital identifiers, informing any service provider not to share the encoded image. Thereby, the owner or user of the sender device will be able to communicate indirectly with any service provider through the registry at the server system.

In an aspect, the system configured to link the recipient to a confidential image encoded with one or more digital identifiers, wherein
- the step of encoding the image with one or more digital identifiers includes one or more recipient-unique digital identifiers, thereby creating a recipient-unique encoded image; and
- the step of creating auxiliary information includes recipient ID enabling identification of the recipient.

The image to be sent to the recipient may contain confidential information, such as, but not limited to, an image of a prototype for a new product to be launched or picture of a nude person. In the first case, the sharing of the confidential information may cause lost revenue since it may not be possible to file for a patent or design patent. In the second case, the sharing of the confidential information may cause personal distress for the person in the image.

In both cases, it can be very difficult to prove that the recipient has acted in bad faith and/or at least have breached the confidentiality. Since the image could be and may have been sent to a series of recipients or the image could have been uploaded by owner or user of the sender device.

Thus, the recipient-unique encoded image having digital identifiers unique for the recipient and thus recipient-unique digital identifier keys linked to the auxiliary information includes recipient ID enabling identification of the recipient. Thereby, the system can be used in forensics for proving that the image is the recipient-unique encoded image and thus must have been leaked from the recipient.

Under national law or federal law. the recipient may have to approve the logging of the recipient ID.

In an aspect, the sender device is configured to receive user input about one or more areas of the image, wherein the step of encoding the image with one or more digital identifiers includes encoding one or more digital identifiers in the areas of the image.

The sender device may be configured to receive user input through a touchscreen such that a user can mark which areas of the image must include at least one digital identifier. This may be relevant in the case of a prototype for a new product or a nude person. In the case of the nude person, the areas of the image may the area of a genitalia or breasts or any other area which is deemed sensitive to the user providing the user input.

In an aspect, the one or more digital identifier keys enable identification of at least one or more of the following:
- metadata of the image;
- a human-visible watermark encoded in the image;
- a Discrete Wavelet Transform (DWT) watermark encoded in the image;
- a Discrete Cosine Transform (DCT) watermark encoded in the image.

The metadata of the image and the human-visible watermark will for a person acting in bad faith be relative easy to remove, however, the DWT watermark and DCT watermark will be near impossible to remove for the average person.

In an aspect, the server system performs an act of changing the auxiliary information linked to one or more digital identifiers as function of a request from an owner of the sender device.

The owner or user of the sender device may, due to the information received by the server system, wish to change the share statement of the encoded image. This may be prompted by a notification from the server system informing that an image has been shared or that the share statement linked to a digital identifier of the encoded image has been requested indicating that unknown third parties are sharing the encoded image.

An object of the invention is achieved by a method for a service provider to act according to an auxiliary information including a share statement linked to an image, wherein a user has uploaded an image to the service provider; the method comprising the steps of:
- sending the image to a server system comprising a registry with a plurality of one or more digital identifier keys linked to auxiliary information including at least a share statement;
- searching in the image for one or more encoded digital identifiers as a function of the one or more digital identifier keys; and when identifying a digital identifier sending at least the share statement of the image to the service provider;
- acting as a function of the share statement.

A service provider receiving an image from a user can check whether this image has a share statement restriction by sending the image to the server system which may be the search for digital identifiers and when finding the digital identifier provide the at least the share statement of the image to the service provider.

Thereby, the service provider will be able to act according to the share statement. This will in effect limit the sharing of the image.

In an aspect, the server system performs as a function of the auxiliary information linked to the digital identifier a step of alerting a sender having encoded the image with digital identifiers.

The sender will be the owner or user of a sender device functioning in the system as described above or in claim 1.

In other embodiments, the server system may search for digital identifiers linked to images having a share statement being confidential or takedown or similar, where the server system sends takedown requests to a service provider or service providers hosting said images.

An object of the invention is achieved by a method for a service provider to act according to a change of auxiliary information including a share statement linked to one or more digital identifiers of an image, where a user has uploaded an image to the service provider, the service provider perform
- a step of encoding the image with one or more digital identifiers, thereby creating an encoded image;
- a step of creating one or more digital identifier keys of said encoded image as a function of the one or more digital identifiers;
- a step of creating auxiliary information, the auxiliary information including at least a share statement;
- a step of linking the auxiliary information to the one or more digital identifier keys;
- a step of sending the one or more digital identifier keys and auxiliary information to a server system;
wherein the service provider receives a request for a change of the share statement linked to the one or more digital identifier keys from the user causing the service provider to perform:
- a step of changing the share statement linked to the one or more digital identifier keys;
- a step of acting according to the share statement.

The method described above functions similarly to the previously described system, however, here the service provider ensures that the image is encoded with a digital identifier by performing the necessary steps as described above. The service provider will thereby enable the user to be able to change the share statement at a later time.

An object of the invention is achieved by a system for providing auxiliary information linked to an image encoded with one or more digital identifiers, the system comprising
- a server system;
- at least one sender device comprising
   - a communication module,
   - an encoding module adapted to encode an image with one or more digital identifiers and to provide a digital identifier key, wherein the sender device is configured to perform the following steps when capturing an image:
      - a step of encoding the image with one or more digital identifiers, thereby creating an encoded image;
      - a step of creating one or more digital identifier keys of said encoded image as a function of the one or more digital identifiers;
      - a step of creating auxiliary information, the auxiliary information including at least a share statement;
      - a step of linking the auxiliary information to the one or more digital identifier keys;
      - a step of sending the one or more digital identifier keys and auxiliary information to the server system.

The server system performs a step of storing the one or more digital identifier keys and auxiliary information. The system is similar to the system previously described, but in this case an image or images are being encoded without the image ever being shared. However, the server system will still build a registry comprising of digital identifier keys linked to auxiliary information. Thus, in the case that the sender device is hacked, the owner or user of the sender device may still use the digital identifiers to send takedown notices to various service providers.

### Description of the Drawings

Figs. 1-2 illustrate a user uploading an image via a sender device to a recipient;
Figs. 3-4 illustrate a user uploading an image to a service provider;
Fig. 5 illustrates a system according to the invention;
Fig. 6 illustrates a service provider requesting a share statement and a sender requesting a change in the share statement;
Fig. 7 illustrates an owner or user requesting information of the recipient, who has leaked a recipient-unique encoded image;
Fig. 8 illustrates a server system sending takedown request to service provider A, ..., service provider Z; and
Fig. 9 illustrates an image without a digital identifier and the same image with the digital identifier.

| **Item** | **Reference number** |
|---|---|
| Image | 10 |
| Encoded image | 12 |
| Recipient-unique encoded image | 14 |
| Owner | 18 |
| User | 20 |
| Recipient | 25 |
| Sender device | 30 |
| Encoding module | 32 |
| Communication module | 34 |
| Server system | 40 |
| Registry | 42 |
| Digital identifier | 50 |
| Digital identifier key | 52 |
| Service provider | 60 |
| Auxiliary information | 70 |
| Share statement | 72 |

### Detailed Description of the Invention

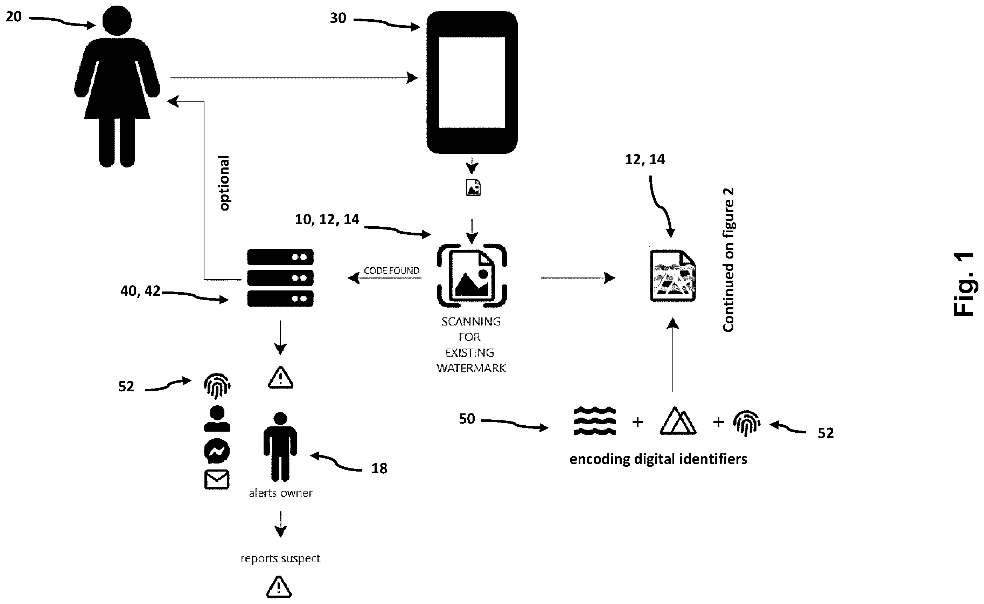

Figs. 1-2 illustrate a user 20 uploading an image 10, 12, 16 via a sender device 30 to a recipient 25.

In this embodiment, the sender device 30 searches or scans for a digital identifier 50 and if a digital identifier 50 is found or at least if the sender device 30 deems there may be a digital identifier 50 encoded in the image 10, then the image 10 being an encoded image 12 or a recipient-unique encoded image 14 is sent to a server system 40. The server system comprises a registry 42 comprising a plurality of digital identifier keys 52 linked to auxiliary information 70. The server system 40 performs a step of searching the encoded image 12, 14 for encoded digital identifiers 50 as a function of the plurality of digital identifier keys 52.

If a digital identifier 50 is found based on a digital identifier key 52 is found, then the auxiliary information 70 linked to said digital identifier key 52 may enable the server system 40 to send a warning to an owner 18 of the encoded image 12, 14. The owner 18 may if the image is a recipient-unique encoded image 14 take legal actions against the recipient 25 who received the recipient-unique encoded image 14.

If the image 10 contains no digital identifiers 50, then the sender device 30 performs a step of encoding the image 10 with one or more digital identifiers 50 and/or one or more recipient-unique digital identifiers 50, thereby creating an encoded image 12 or a recipient-unique encoded image 14, and the sender device 30 performs a step of creating one or more digital identifier keys 52 of said encoded image 12 or recipient-unique encoded image 14 as a function of the one or more digital identifiers 50.

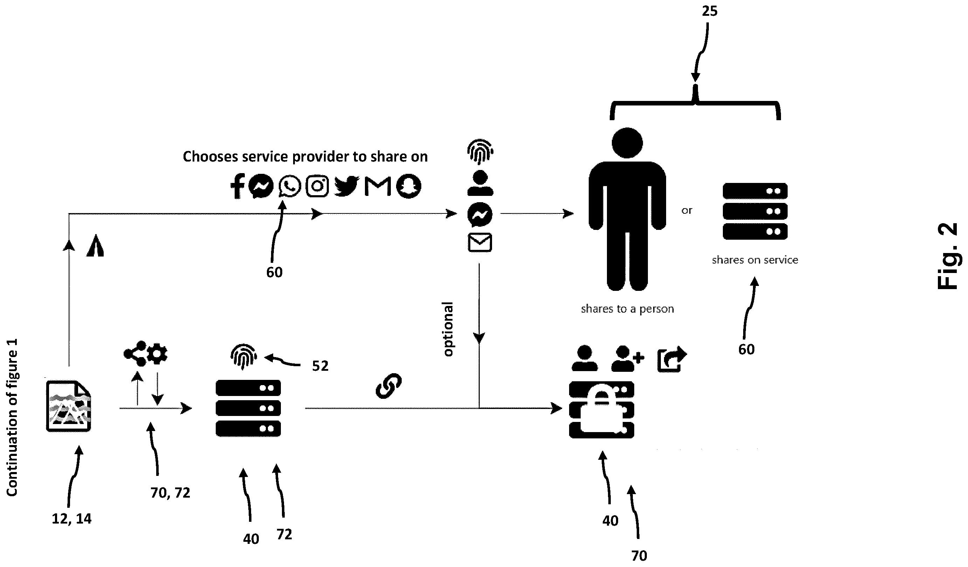

Figure 2. The sender device further performs a step of creating auxiliary information 70 including at least a share statement 72. The auxiliary information 70 may at least in part be based on user input. The one or more digital identifier keys and the auxiliary information 70 are sent to and stored on the server system 40. The server system 40 comprises an at least partly public registry 42 of the server system containing digital identifier keys linked to the share statements 72 such that a requester may be informed whether an image may be shared or not.

The server system 40 may comprise a secured registry (indicated by the lock) containing auxiliary information 70 enabling the owner of the encoded image 12 to be contacted or may contain information enabling identification of the recipient 25.

The encoded image 12, 14 may afterwards be uploaded to the recipient 25, this may be through varies service providers 60. The shown service providers 60 are Facebook, Messenger, WhatsApp, Instagram, Twitter, Gmail, and Snapchat. The list of service providers 60 is non-exhaustive.

The recipient 25 may be a natural person or a legal person such as a service provider 60, where the encoded image is made publicly available through the service providers 60.

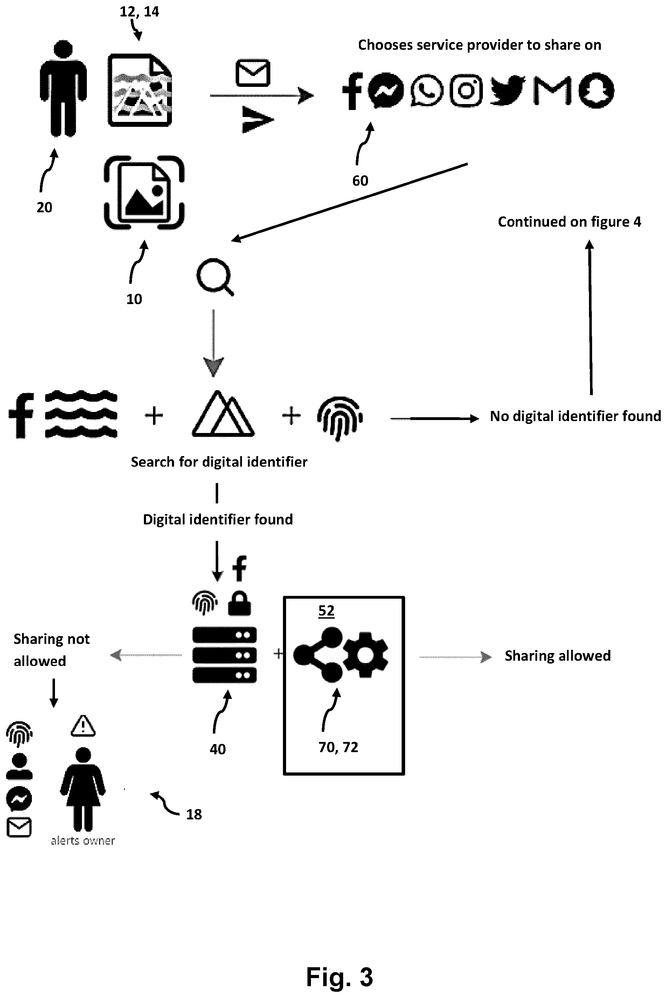

Figs. 3-4 illustrate a user 20 uploading an image 10 to a service provider 60. The shown service providers 60 are Facebook, Messenger, WhatsApp, Instagram, Twitter, Gmail, and Snapchat. The list of service providers 60 is non-exhaustive.

The service provider 60 does not know whether the image 10 contain digital identifiers or whether the user 20 is sharing a confidential image being an encoded image 12 or a recipient-unique encoded image 14.

The service provider 60 may search for a digital identifier or request the server system 40 to search for a digital identifier as a function of the stored digital identifier keys 52.

If a digital identifier is found based on a digital identifier key, then the share statement is checked and the encode image 12, 14 may be shared if the share statement 72 allows sharing or the encoded image 12, 14 may not be shared if the share statement 72 does not allow sharing. Depending on the other parts of the auxiliary information 70 linked to the digital identifier key 52, then the owner 18 of the encoded image 12, 14 may be warned.

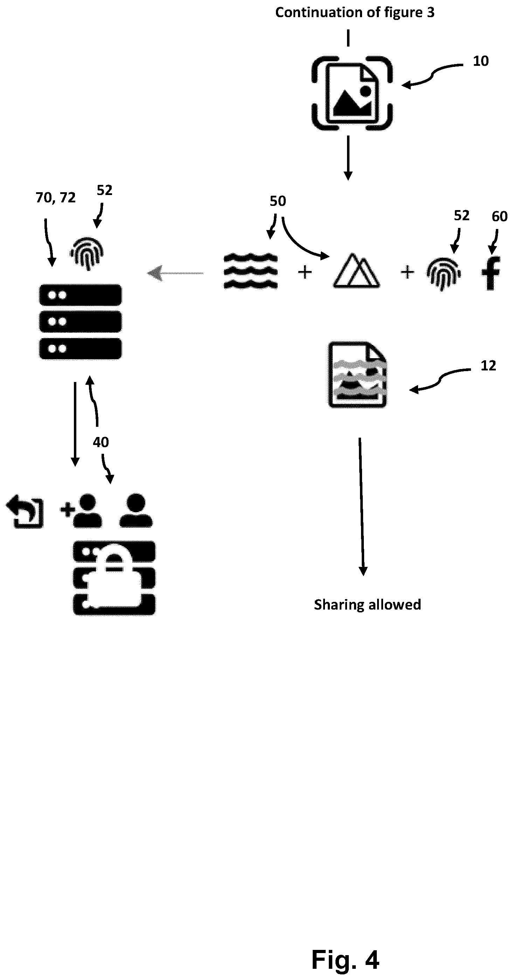

Continued on figure 4, when no digital identifier found, then the service provider 60 may perform a step of encoding the image 10 with one or more digital identifiers 50, thereby creating an encoded image 12, and the service provider 60 may perform a step of creating one or more digital identifier keys 52 of said encoded image 12 as a function of the one or more digital identifiers 50.

The service provider 60 then performs a step of creating auxiliary information 70 including at least a share statement 72. The one or more digital identifier keys and the auxiliary information 70 are sent to and stored on the server system 40. The server system 40 comprises an at least partly public registry 42 of the server system containing digital identifier keys linked to the share statements 72 such that a requester may be informed whether the image 12 may be shared or not.

The service provider 60 shares the encode image 12.

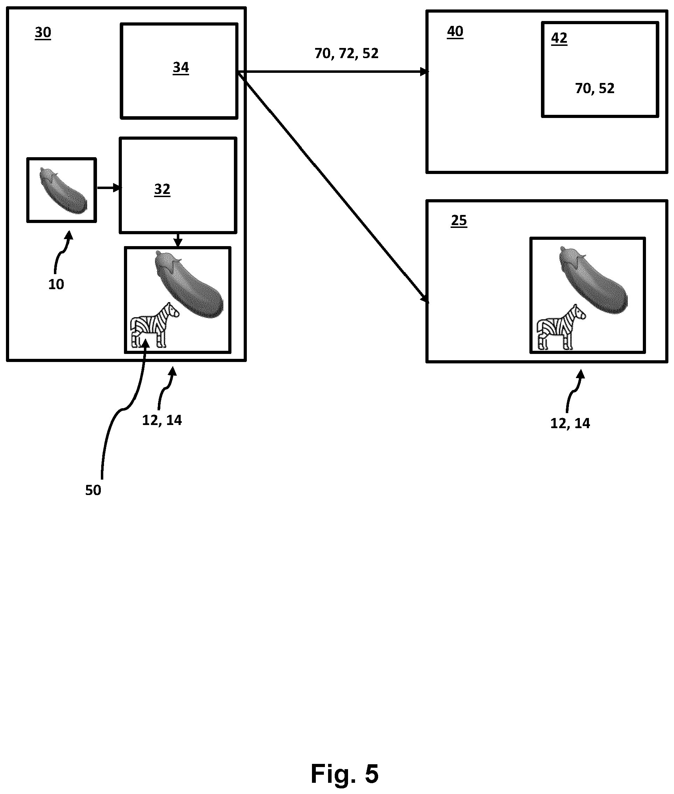

Fig. 5 illustrates a system according to the invention in its most simplistic form. A recipient 25 is shown however then recipient 25 is not part of the system.

The system comprises at least one sender device 30 and a server system 40.

The sender device 30 comprises a communication module 34 for communicating with the recipient and server system.

The sender device 30 comprises an encoding module 32 adapted to encode an image 10 with one or more digital identifiers 50 and to provide a digital identifier key 52 (not shown). The image 10 is in this case of an eggplant. In the present example the encoded image 12 contains a digital identifier 50 in the form of a zebra watermark; the digital identifier 50 will typically be designed to invisible for the human eye.

The sender device 30 is configured to perform the following steps when capturing an image 10 or when sending an image 10 or when prompted by a user input;
- a step of encoding the image 10 with one or more digital identifiers 50, thereby creating an encoded image 12;
- a step of creating one or more digital identifier keys 52 of said encoded image 12 as a function of the one or more digital identifiers 50;
- a step of creating auxiliary information 70, the auxiliary information including at least a share statement 72;
- a step of linking the auxiliary information 70 to the one or more digital identifier keys 52;
- a step of sending the one or more digital identifier keys 52 and auxiliary information 70 to the server system 40.

The server system 40 comprising a registry 42 containing a plurality of digital identifier keys 52 linked to auxiliary information 70. The purpose of the digital identifier keys 52 is to enable faster recognition of digital identifiers 50 in an image 50, while at the same time link the digital identifiers 50 of an image 10 with auxiliary information 70 including at least a share statement 72.

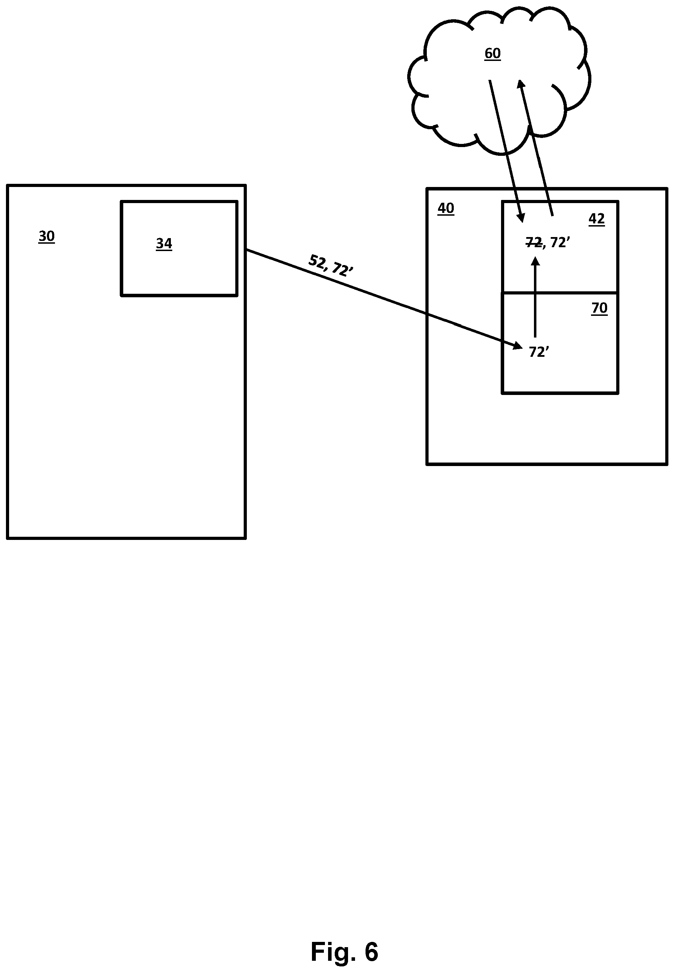

Fig. 6 illustrates a service provider 60 requesting a share statement 72 and a sender device 30 requesting a change in the share statement 72 to 72'.

The server system 40 comprising a registry 42 containing a plurality of digital identifier keys 52 (not shown) linked to auxiliary information 70.

The server system 40 is configured to perform the following steps, when receiving a request image from a requester, which in this embodiment is the service provider 60:
- a step of searching the requested image 10 for encoded digital identifiers 50 as a function of the plurality of digital identifier keys 52; and
- a step of sending at least the share statement 72 linked to the digital identifier key 52 to the requester being service provider 60.

The sender device 30 requests that the share statement linked to digital identifier key 52 is changed to share statement 72', which may be "sharing not allowed" or "sharing allowed". The system server 40 will thereafter provide the share statement 72' for the digital identifier key 52.

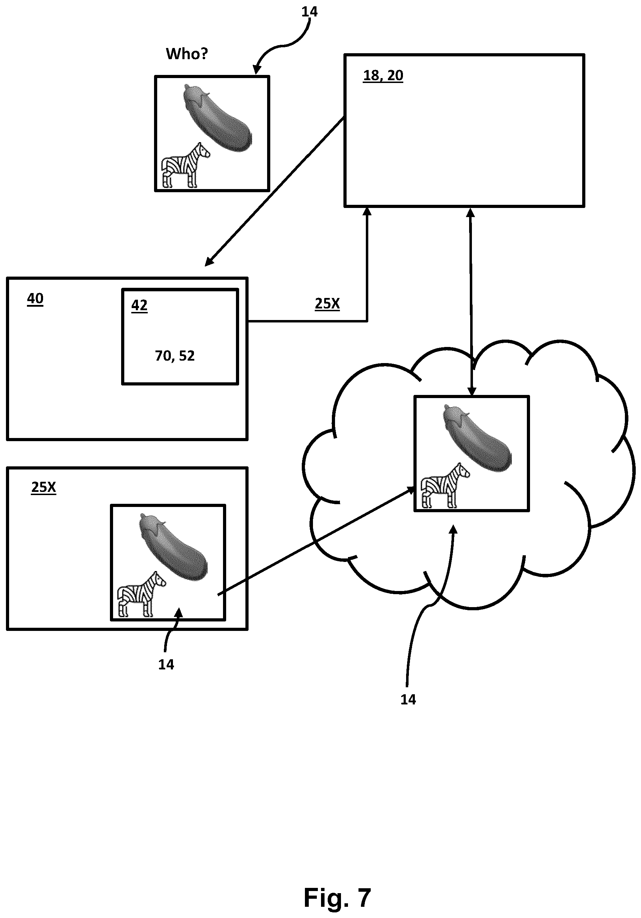

Fig. 7 illustrates an owner 18 or user 20 requesting information of the recipient 25, who has leaked a recipient-unique encoded image 14. In this case, recipient 25X has leaked the recipient-unique encoded image 14 to the internet represented by the cloud. The owner 18 or user 20 has found the image 14 and request the system server 40 for the recipient 25 of the recipient-unique encoded image 14, which the system server 40 is able to provide as the recipient 25X. The owner 18 or user 20 may then instigate legal proceedings against the recipient 25X.

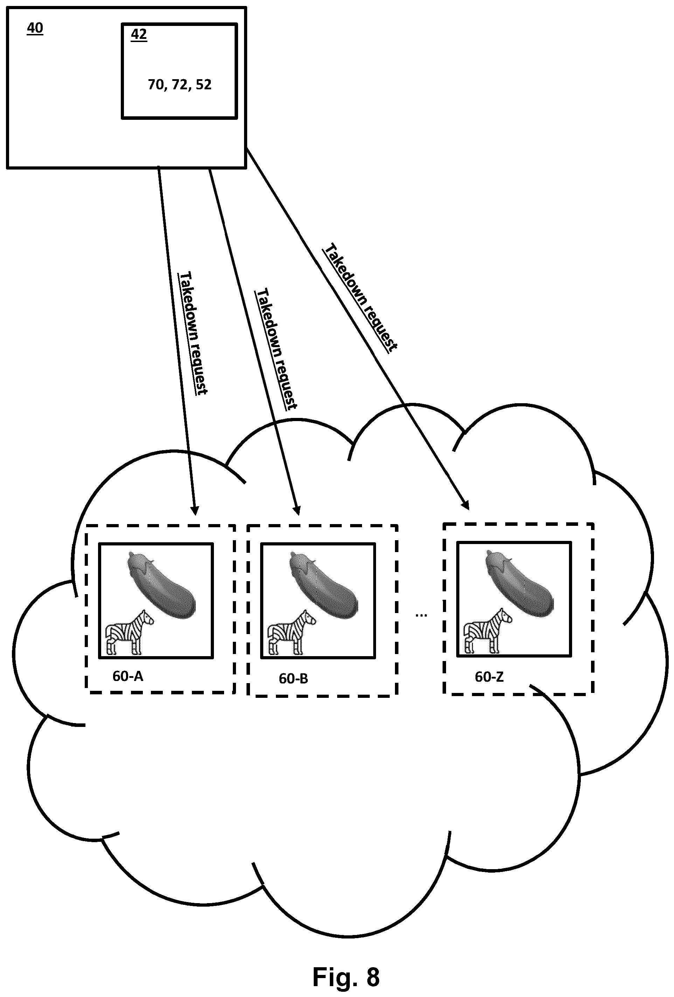

Fig. 8 illustrates a server system 40 sending a takedown request to service provider 60A, ..., service provider 60Z. The server system 40 crawls the service providers 60A-60Z in search of digital identifiers 50 linked to a digital identifier key 52.

Fig. 9 illustrates an image 10 without a digital identifier 50, see Figure 9A, and the same image 10 with the digital identifier 52, see Figure 9B.

The image 10 is from the website: https://thispersondoesnotexist.com/.

Figure 9B is provided with at 128 bit digital identifier.

## Claims

1. A system for providing auxiliary information (70) linked to an image (10) encoded with one or more digital identifiers (50), the system comprising
- a server system (40);
- at least one sender device (30) comprising
- a communication module (34),
- an encoding module (32) adapted to encode an image (10) with one or more digital identifiers (50) and to provide a digital identifier key (52), wherein the sender device (30) is configured to perform the following steps when capturing an image (10):
- a step of encoding the image (10) with one or more digital identifiers (50), thereby creating an encoded image (12);
- a step of creating one or more digital identifier keys (52) of said encoded image (12) as a function of the one or more digital identifiers (50);
- a step of creating auxiliary information (70), the auxiliary information (70) including at least a share statement (72);
- a step of linking the auxiliary information (70) to the one or more digital identifier keys (52);
- a step of sending the one or more digital identifier keys (52) and auxiliary information (70) to the server system (40).

2. A system according to claim 1 for providing auxiliary information (70) linked to an image (10) encoded with one or more digital identifiers (50), the server system (40) comprising
- a registry (42) comprising a plurality of digital identifier keys (52) linked to auxiliary information (70); wherein the server system (40) is configured to perform the following steps, when receiving a request image from a requester:
- a step of searching the request image for encoded digital identifiers (50) as a function of the plurality of digital identifier keys (52); and
- a step of sending at least the share statement (72) linked to the digital identifier key (52) to the requester.

3. A system according to claim 1 or 2, wherein the auxiliary information (70) further includes at least one or more of the following:
- recipient ID;
- contact details of recipient;
- sender ID;
- contact details of sender;
- user names or handles to one or more social medias linked to the sender device (30).

4. A system according to any of claims 1 to 3, wherein the recipient (25) is a service provider (60) and the encoded image (12) is publicly available at the service provider (60).

5. A system according to any of claims 1 to 3, wherein the system configured to link the recipient (25) to a confidential image encoded with one or more digital identifiers (50), wherein
- the step of encoding the image (10) with one or more digital identifiers (50) includes one or more recipient-unique digital identifiers, thereby creating a recipient-unique encoded image (14); and
- the step of creating auxiliary information (70) includes recipient ID enabling identification of the recipient (25).

6. A system according to claim 5, wherein the sender device (30) is configured to receive user input about one or more areas of the image (10), wherein the step of encoding the image (10) with one or more digital identifiers (50) includes encoding one or more digital identifiers (50) in the areas of the image (10).

7. A system according to anyone of claims 1-6, wherein the one or more digital identifier keys (52) enable identification of at least one or more of the following:
- metadata of the image (10);
- a human-visible watermark encoded in the image (10);
- a Discrete Wavelet Transform (DWT) watermark encoded in the image (10);
- a Discrete Cosine Transform (DCT) watermark encoded in the image (10).

8. A system according to anyone of claims 1-7, wherein the server system (40) performs an act of changing the auxiliary information (70) linked to one or more digital identifiers (50) as a function of a request from an owner (18) of the sender device (30).

9. A method for a service provider (60) to act according to an auxiliary information (70) including a share statement (72) linked to an image (10), wherein a user (20) has uploaded an image (10) to the service provider (60); the method comprising the steps of
- sending the image (10) to a server system comprising a registry (42) with a plurality of one or more digital identifier keys (50) linked to auxiliary information (70) including at least a share statement (72);
- searching in the image (10) for one or more encoded digital identifiers (50) as a function of the one or more digital identifier keys (52); and when identifying a digital identifier (50) sending at least the share statement (72) of the image (10) to the service provider (60);
- acting as a function of the share statement (72);
**characterized in that** the following steps are performed, either at a sender device (30) of the user (20) when capturing the image (10) before the user (20) uploads the image (10) to the service provider (60), or at the service provider (60) to which the image (10) is uploaded:
encoding the image (10) with the one or more digital identifiers (50), thereby creating an encoded image (12),
creating the one or more digital identifier keys (52) of said encoded image (12) as a function of the one or more digital identifiers (50);
creating the auxiliary information (70), the auxiliary information (70) including at least a share statement (72);
linking the auxiliary information (70) to the one or more digital identifier keys (52); and
sending the one or more digital identifier keys (52) and auxiliary information (70) to the server system (40).

10. A method according to claim 9, wherein the server system (40) performs as a function of the auxiliary information (70) linked to the digital identifier (50) a step of alerting a sender having encoded the image (10) with digital identifiers (50).

11. A method for a service provider (60) to act according to a change of auxiliary information (70) including a share statement (72) linked to one or more digital identifiers (50) of an image (10), where a user (20) has uploaded an image (10) to the service provider (60), wherein the service provider (60) performs
- a step of encoding the image (10) with one or more digital identifiers (50), thereby creating an encoded image (12);
- a step of creating one or more digital identifier keys (52) of said encoded image (52) as a function of the one or more digital identifiers (50);
- a step of creating auxiliary information (70), the auxiliary information (70) including at least a share statement (72);
- a step of linking the auxiliary information (70) to the one or more digital identifier keys (52);
- a step of sending the one or more digital identifier keys (52) and auxiliary information (70) to a server system (40);
wherein the service provider (60) receive a request for a change of the share statement (72) linked to the one or more digital identifier keys (52) from the user (20) causing the service provider (60) to perform
- a step of changing the share statement (72) linked to the one or more digital identifier keys (52);
- a step of acting according to the share statement (72).

## Patentansprüche

1. System zur Bereitstellung von mit einem Bild (10), das mit einem oder mehreren digitalen Identifikatoren (50) codiert ist, verbundenen Zusatzinformationen (70), wobei das System Folgendes umfasst:
- ein Serversystem (40);
- mindestens eine Sendervorrichtung (30), umfassend
- ein Kommunikationsmodul (34),
- ein Codierungsmodul (32), das angepasst ist, um ein Bild (10) mit einem oder mehreren digitalen Identifikatoren (50) zu codieren und einen digitalen Identifikatorschlüssel (52) bereitzustellen, wobei die Sendervorrichtung (30) konfiguriert ist, um die folgenden Schritte durchzuführen, wenn ein Bild (10) erfasst wird:
- den Schritt des Codierens des Bildes (10) mit einem oder mehreren digitalen Identifikatoren (50), wodurch ein codiertes Bild (12) erzeugt wird;
- den Schritt des Erzeugens eines oder mehrerer digitaler Identifikatorschlüssel (52) des codierten Bildes (12) als eine Funktion des einen oder der mehreren digitalen Identifikatoren (50);
- den Schritt des Erzeugens von Zusatzinformationen (70), wobei die Zusatzinformationen (70) mindestens eine gemeinsame Anweisung (72) beinhalten;
- den Schritt des Verbindens der Zusatzinformationen (70) mit dem einen oder den mehreren digitalen Identifikatorschlüsseln (52);
- den Schritt des Sendens des einen oder der mehreren digitalen Identifikatorschlüssel (52) und der Zusatzinformationen (70) an das Serversystem (40).

2. System nach Anspruch 1 zur Bereitstellung von mit einem Bild (10), das mit einem oder mehreren digitalen Identifikatoren (50) codiert ist, verbundenen Zusatzinformationen (70), wobei das Serversystem (40) Folgendes umfasst:
- eine Registratur (42), die eine Vielzahl von digitalen Identifikatorschlüsseln (52) umfasst, die mit Zusatzinformationen (70) verbunden sind; wobei das Serversystem (40) konfiguriert ist, um die folgenden Schritte durchzuführen, wenn ein Anforderungsbild von einem Anforderer empfangen wird:
- den Schritt des Durchsuchens des Anforderungsbildes nach codierten digitalen Identifikatoren (50) als eine Funktion der Vielzahl von digitalen Identifikatorschlüsseln (52); und
- den Schritt des Sendens mindestens der mit dem digitalen Identifikatorschlüssel (52) verbundenen gemeinsamen Anweisung (72) an den Anforderer.

3. System nach Anspruch 1 oder 2, wobei die Zusatzinformationen (70) ferner mindestens eines oder mehrere der Folgenden beinhalten:
- Empfänger-ID;
- Kontaktdaten des Empfängers;
- Sender-ID;
- Kontaktdaten des Senders;
- Benutzernamen oder Handles zu einem oder mehreren sozialen Medien, die mit der Sendervorrichtung (30) verbunden sind.

4. System nach einem der Ansprüche 1 bis 3, wobei der Empfänger (25) ein Dienstanbieter (60) ist und das codierte Bild (12) bei dem Dienstanbieter (60) öffentlich verfügbar ist.

5. System nach einem der Ansprüche 1 bis 3, wobei das System konfiguriert, um den Empfänger (25) mit einem vertraulichen Bild zu verbinden, das mit einem oder mehreren digitalen Identifikatoren (50) codiert ist, wobei
- der Schritt des Codierens des Bildes (10) mit einem oder mehreren digitalen Identifikatoren (50) einen oder mehrere empfängereindeutige digitale Identifikatoren einschließt, wodurch ein empfängereindeutiges codiertes Bild (14) erzeugt wird; und
- der Schritt des Erzeugens von Zusatzinformationen (70) eine Empfänger-ID einschließt, die eine Identifizierung des Empfängers (25) ermöglicht.

6. System nach Anspruch 5, wobei die Sendervorrichtung (30) konfiguriert ist, um eine Benutzereingabe über einen oder mehrere Bereiche des Bildes (10) zu empfangen, wobei der Schritt des Codierens des Bildes (10) mit einem oder mehreren digitalen Identifikatoren (50) ein Codieren eines oder mehrerer digitaler Identifikatoren (50) in den Bereichen des Bildes (10) einschließt.

7. System nach einem der Ansprüche 1-6, wobei der eine oder die mehreren digitalen Identifikatorschlüssel (52) eine Identifizierung mindestens eines oder mehrerer der Folgenden ermöglichen:
- Metadaten des Bildes (10);
- ein für das menschliche Auge sichtbare Wasserzeichen, das in dem Bild (10) codiert ist;
- ein Wasserzeichen der diskreten Wavelet-Transformation (DWT), das in dem Bild (10) codiert ist;
- ein Wasserzeichen der diskreten Cosinustransformation (DCT), das in dem Bild (10) codiert ist.

8. System nach einem der Ansprüche 1-7, wobei das Serversystem (40) eine Handlung eines Änderns der Zusatzinformationen (70), die mit einem oder mehreren digitalen Identifikatoren (50) verbunden sind, als eine Funktion einer Anforderung von einem Eigentümer (18) der Sendervorrichtung (30) durchführt.

9. Verfahren für einen Dienstanbieter (60), um gemäß einer Zusatzinformation (70) zu handeln, die eine gemeinsame Anweisung (72) beinhaltet, die mit einem Bild (10) verbunden ist, wobei ein Benutzer (20) ein Bild (10) zu dem Dienstanbieter (60) hochgeladen hat; wobei das Verfahren die folgenden Schritte umfasst
- Senden des Bildes (10) an ein Serversystem, das eine Registratur (42) mit einer Vielzahl von einem oder mehreren digitalen Identifikatorschlüsseln (50) umfasst, die mit Zusatzinformationen (70) verbunden sind, die mindestens eine gemeinsame Anweisung (72) beinhalten;
- Durchsuchen des Bildes (10) nach einem oder mehreren codierten digitalen Identifikatoren (50) als eine Funktion des einen oder der mehreren digitalen Identifikatorschlüssel (52); und wenn ein digitaler Identifikator (50) identifiziert wird, Senden mindestens der gemeinsamen Anweisung (72) des Bildes (10) an den Dienstanbieter (60);
- Handeln als eine Funktion der gemeinsamen Anweisung (72); **dadurch gekennzeichnet, dass**
die folgenden Schritte entweder an einer Sendervorrichtung (30) des Benutzers (20), wenn das Bild (10) erfasst wird, bevor der Benutzer (20) das Bild (10) zu dem Dienstanbieter (60) hochlädt, oder an dem Dienstanbieter (60), zu dem das Bild (10) hochgeladen wird, durchgeführt werden:
ein Codieren des Bildes (10) mit dem einen oder den mehreren digitalen Identifikatoren (50), wodurch ein codiertes Bild (12) erzeugt wird,
ein Erzeugen des einen oder der mehreren digitalen Identifikatorschlüssel (52) des codierten Bildes (12) als eine Funktion des einen oder der mehreren digitalen Identifikatoren (50);
ein Erzeugen der Zusatzinformationen (70), wobei die Zusatzinformationen (70) mindestens eine gemeinsame Anweisung (72) beinhalten;
ein Verbinden der Zusatzinformationen (70) mit dem einen oder den mehreren digitalen Identifikatorschlüsseln (52); und
ein Senden des einen oder der mehreren digitalen Identifikatorschlüssel (52) und der Zusatzinformationen (70) an das Serversystem (40).

10. Verfahren nach Anspruch 9, wobei das Serversystem (40) als eine Funktion der mit dem digitalen Identifikator (50) verbundenen Zusatzinformationen (70) den Schritt des Alarmierens eines Senders durchführt, der das Bild (10) mit digitalen Identifikatoren (50) codiert hat.

11. Verfahren für einen Dienstanbieter (60), um gemäß einer Änderung von Zusatzinformationen (70) zu handeln, die eine gemeinsame Anweisung (72) beinhalten, die mit einem oder mehreren digitalen Identifikatoren (50) eines Bildes (10) verbunden sind, wobei ein Benutzer (20) ein Bild (10) zu dem Dienstanbieter (60) hochgeladen hat, wobei
der Dienstanbieter (60) Folgendes durchführt
- den Schritt des Codierens des Bildes (10) mit einem oder mehreren digitalen Identifikatoren (50), wodurch ein codiertes Bild (12) erzeugt wird;
- den Schritt des Erzeugens eines oder mehrerer digitaler Identifikatorschlüssel (52) des codierten Bildes (52) als eine Funktion des einen oder der mehreren digitalen Identifikatoren (50);
- den Schritt des Erzeugens von Zusatzinformationen (70), wobei die Zusatzinformationen (70) mindestens eine gemeinsame Anweisung (72) beinhalten;
- den Schritt des Verbindens der Zusatzinformationen (70) mit dem einen oder den mehreren digitalen Identifikatorschlüsseln (52);
- den Schritt des Sendens des einen oder der mehreren digitalen Identifikatorschlüssel (52) und der Zusatzinformationen (70) an ein Serversystem (40);
wobei der Dienstanbieter (60) eine Anforderung für eine Änderung der gemeinsamen Anweisung (72), die mit dem einen oder den mehreren digitalen Identifikatorschlüsseln (52) verbunden ist, von dem Benutzer (20) empfangen, was den Dienstanbieter (60) veranlasst, durchzuführen
- den Schritt des Änderns der gemeinsamen Anweisung (72), die mit dem einen oder den mehreren digitalen Identifikatorschlüsseln (52) verbunden ist;
- den Schritt des Handelns gemäß der gemeinsamen Anweisung (72).

## Revendications

1. Système pour fournir des informations auxiliaires (70) liées à une image (10) encodée avec les un ou plusieurs identifiants numériques (50), le système comprenant
- un système serveur (40) ;
- au moins un dispositif émetteur (30) comprenant
- un module de communication (34),
- un module d'encodage (32) conçu pour encoder une image (10) avec un ou plusieurs identifiants numériques (50) et pour fournir une clé d'identifiant numérique (52), dans lequel le dispositif émetteur (30) est configuré pour réaliser les étapes suivantes lors de la capture d'une image (10) :
- une étape d'encodage de l'image (10) avec un ou plusieurs identifiants numériques (50), créant ainsi une image encodée (12) ;
- une étape de création d'une ou de plusieurs clés d'identifiant numérique (52) de ladite image encodée (12) en fonction des un ou plusieurs identifiants numériques (50) ;
- une étape de création d'informations auxiliaires (70), les informations auxiliaires (70) comportant au moins une déclaration de partage (72) ;
- une étape de liaison des informations auxiliaires (70) aux une ou plusieurs clés d'identifiant numérique (52) ;
- une étape d'envoi des une ou plusieurs clés d'identifiant numérique (52) et d'informations auxiliaires (70) au système serveur (40).

2. Système selon la revendication 1 pour fournir des informations auxiliaires (70) liées à une image (10) encodée avec un ou plusieurs identifiants numériques (50), le système serveur (40) comprenant
- un registre (42) comprenant une pluralité de clés d'identifiant numérique (52) liées à des informations auxiliaires (70) ; dans lequel le système serveur (40) est configuré pour réaliser les étapes suivantes, lors de la réception d'une image de requête provenant d'un demandeur :
- une étape de recherche dans l'image de requête d'identifiants numériques encodés (50) en fonction de la pluralité de clés d'identifiant numérique (52) ; et
- une étape d'envoi d'au moins la déclaration de partage (72) liée à la clé d'identifiant numérique (52) au demandeur.

3. Système selon la revendication 1 ou 2, dans lequel les informations auxiliaires (70) comportent en outre au moins un ou plusieurs des éléments suivants :
- l'identifiant du destinataire ;
- les coordonnées du destinataire ;
- l'identifiant de l'émetteur ;
- les coordonnées de l'émetteur ;
- noms d'utilisateur ou identifiants d'un ou de plusieurs réseaux sociaux liés au dispositif émetteur (30).

4. Système selon l'une quelconque des revendications 1 à 3, dans lequel le destinataire (25) est un fournisseur de services (60) et l'image encodée (12) est accessible au public chez le fournisseur de services (60).

5. Système selon l'une quelconque des revendications 1 à 3, dans lequel le système est configuré pour lier le destinataire (25) à une image confidentielle encodée avec un ou plusieurs identifiants numériques (50), dans lequel
- l'étape d'encodage de l'image (10) avec un ou plusieurs identifiants numériques (50) comporte un ou plusieurs identifiants numériques uniques au destinataire, créant ainsi une image encodée unique au destinataire (14) ; et
- l'étape de création d'informations auxiliaires (70) comporte l'identifiant du destinataire permettant l'identification du destinataire (25).

6. Système selon la revendication 5, dans lequel le dispositif émetteur (30) est configuré pour recevoir une entrée utilisateur concernant une ou plusieurs zones de l'image (10), dans lequel l'étape d'encodage de l'image (10) avec un ou plusieurs identifiants numériques (50) comporte l'encodage d'un ou de plusieurs identifiants numériques (50) dans les zones de l'image (10).

7. Système selon l'une quelconque des revendications 1 à 6, dans lequel les une ou plusieurs clés d'identifiant numérique (52) permettent l'identification d'au moins un ou plusieurs des éléments suivants :
- des métadonnées de l'image (10) ;
- un filigrane visible par l'homme encodé dans l'image (10) ;
- un filigrane de transformation en ondelettes discrètes (DWT) encodé dans l'image (10) ;
- un filigrane de transformation en cosinus discrète (DCT) encodé dans l'image (10).

8. Système selon l'une quelconque des revendications 1 à 7, dans lequel le système serveur (40) réalise une action de modification des informations auxiliaires (70) liées à un ou plusieurs identifiants numériques (50) en fonction d'une requête d'un propriétaire (18) du dispositif émetteur (30).

9. Procédé permettant à un fournisseur de services (60) d'agir en fonction d'informations auxiliaires (70) comportant une déclaration de partage (72) liée à une image (10), dans lequel un utilisateur (20) a téléchargé une image (10) auprès du fournisseur de services (60) ; le procédé comprenant les étapes suivantes
- l'envoi de l'image (10) à un système serveur comprenant un registre (42) avec une pluralité d'une ou de plusieurs clés d'identifiant numérique (50) liées à des informations auxiliaires (70) comportant au moins une déclaration de partage (72) ;
- la recherche dans l'image (10) d'un ou de plusieurs identifiants numériques encodés (50) en fonction des une ou plusieurs clés d'identifiant numérique (52) ; et lors de l'identification d'un identifiant numérique (50), l'envoi d'au moins la déclaration de partage (72) de l'image (10) au fournisseur de services (60) ;
- le fait d'agir en fonction de la déclaration de partage (72) ;
**caractérisé en ce que**
les étapes suivantes sont réalisées, soit au niveau d'un dispositif émetteur (30) de l'utilisateur (20) lors de la capture de l'image (10), avant que l'utilisateur (20) ne télécharge l'image (10) auprès du fournisseur de services (60), soit au niveau du fournisseur de services (60) auprès duquel l'image (10) est téléchargée :
l'encodage de l'image (10) avec les un ou plusieurs identifiants numériques (50), créant ainsi une image encodée (12),
la création des une ou plusieurs clés d'identifiant numérique (52) de ladite image encodée (12) en fonction des un ou plusieurs identifiants numériques (50) ;
la création des informations auxiliaires (70), les informations auxiliaires (70) comportant au moins une déclaration de partage (72) ;
la liaison des informations auxiliaires (70) aux une ou plusieurs clés d'identifiant numérique (52) ; et
l'envoi des une ou plusieurs clés d'identifiant numérique (52) et d'informations auxiliaires (70) au système serveur (40).

10. Procédé selon la revendication 9, dans lequel le système serveur (40) réalise, en fonction des informations auxiliaires (70) liées à l'identifiant numérique (50), une étape d'alerte d'un émetteur ayant encodé l'image (10) avec des identifiants numériques (50).

11. Procédé permettant à un fournisseur de services (60) d'agir en fonction d'une modification d'informations auxiliaires (70) comportant une déclaration de partage (72) liée à un ou plusieurs identifiants numériques (50) d'une image (10), dans lequel un utilisateur (20) a téléchargé une image (10) auprès du fournisseur de services (60), dans lequel le fournisseur de services (60) réalise
- une étape d'encodage de l'image (10) avec un ou plusieurs identifiants numériques (50), créant ainsi une image encodée (12) ;
- une étape de création d'une ou de plusieurs clés d'identifiant numérique (52) de ladite image encodée (52) en fonction des un ou plusieurs identifiants numériques (50) ;
- une étape de création d'informations auxiliaires (70), les informations auxiliaires (70) comportant au moins une déclaration de partage (72) ;
- une étape de liaison des informations auxiliaires (70) aux une ou plusieurs clés d'identifiant numérique (52) ;
- une étape d'envoi des une ou plusieurs clés d'identifiant numérique (52) et d'informations auxiliaires (70) à un système serveur (40) ;
dans lequel le fournisseur de services (60) reçoit une requête de modification de la déclaration de partage (72) liée aux une ou plusieurs clés d'identifiant numérique (52) de la part de l'utilisateur (20), amenant le fournisseur de services (60) à réaliser
- une étape de modification de la déclaration de partage (72) liée aux une ou plusieurs clés d'identifiant numérique (52) ;
- une étape consistant à agir en fonction de la déclaration de partage (72).
